Europäisches Patentamt

European Patent Office

Office européen des brevets

(11) Publication number: **0 046 347**
**B1**

(12) **EUROPEAN PATENT SPECIFICATION**

(45) Date of publication of patent specification: **30.01.85**

(51) Int. Cl.[4]: **C 08 B 31/00**

(21) Application number: **81303525.0**

(22) Date of filing: **31.07.81**

(54) Method of modifying starch.

(30) Priority: **07.08.80 GB 8025828**

(43) Date of publication of application:
**24.02.82 Bulletin 82/08**

(45) Publication of the grant of the patent:
**30.01.85 Bulletin 85/05**

(84) Designated Contracting States:
**AT BE CH DE FR GB IT LI NL SE**

(56) References cited:
EP-A-0 041 316
DE-A-2 934 464
GB-A-1 425 624

CHEMICAL ABSTRACTS, vol. 84, no. 20, 17th
May 1976, page 107, no. 137399r Columbus,
Ohio, U.S.A.
CHEMICAL ABSTRACTS, vol. 81, no. 20, 18th
November 1974, page 175, no. 12334v
Columbus, Ohio, U.S.A.

(73) Proprietor: **CPC INTERNATIONAL INC.**
**International Plaza P.O. Box 8000**
**Englewood Cliffs New Jersey 07632 (US)**
(84) **BE CH DE GB IT LI NL SE AT**

(73) Proprietor: **Société des Produits du Mais**
**379, Avenue du Général de Gaulle**
**F-92142 Clamart B.P. Cedex 10-75300 Paris (FR)**
(84) **FR**

(72) Inventor: **Marquette, George Henri Albert**
**Societe Des Produits Du Mais Rue Du Michel**
**Joffre**
**F-59320 Haubourdin (FR)**

(74) Representative: **Pennant, Pyers et al**
**Stevens, Hewlett & Perkins 5 Quality Court**
**Chancery Lane**
**London, WC2A 1HZ (GB)**

Courier Press, Leamington Spa, England.

# Description

Our co-pending British Patent Application, No. 8013830 provides a method of chemically modifying starch by subjecting a mixture of starch with a modifying reagent to the action of ultra high frequency (UHF) radiation. The present invention is concerned with an application of that method to prepare glues and pastes, for example of the kind used in the paper and cardboard industry.

It is well-known that the preparation of chemically modified starch glues is usually done by subjecting a slurry of starch, already chemically modified by known methods, to a thermo-chemical or enzymatic thermal cooking in batch or by the use of continuous cookers as already known, in order to obtain the desired viscosities for different applications. This known process has the disadvantage of involving two steps, which are normally carried out in different factories.

The present invention provides a process for chemically modifying starch, characterized by the steps of:—

(a) providing an aqueous slurry of the starch;

(b) forming a mixture of the said starch with at least one reagent which reacts chemically with the starch;

(c) gelatinizing the starch; and

(d) subjecting the starch/reagent mixture to UHF radiation so as to effect chemical modification of the starch, wherein steps (c) and (d) are carried out at the same time or step (c) is carried out before step (d).

The process is preferably operated continuously. However, when an enzymatic cooker is used to gelatinise the starch, it may be convenient to use a batch or a continuous cooker.

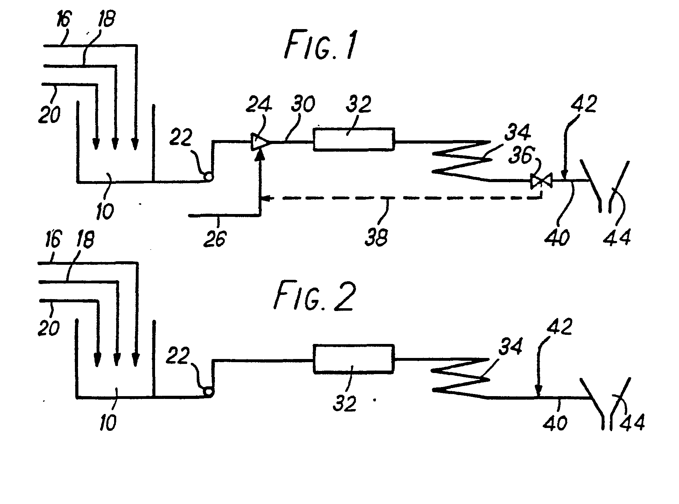

Figures 1 to 3 of the accompanying drawings are all diagramatic representation of equipment for performing different variations of the process.

In each of the drawings, like numerals denote like parts.

Referring to Figure 1, a tank 10 to contain an aqueous starch slurry is provided with an inlet 16 for starch, and inlet 18 for a reagent to react chemically with the starch, and an inlet 20 for a catalyst. A volumetric pump 22 leads the aqueous slurry to a thermal cooker 24 which is also supplied with steam via a line 26. In the cooker 24 the starch is heated under pressure to a temperature of 130°C to 150°C and gelatinized.

The aqueous paste of gelatinized starch and reagent passes via a line 30 along a glass pipe (not shown) extending through a tunnel 32 forming a cavity for UHF radiation. The treated paste passes through a retention cell 34 whose exit is provided with a counter-pressure valve 36 upstream of which is a line 38 connected to the steam line 26 for regulating the temperature of the system. Downstream of the valve 36, an exit conduit 40 is provided with a dilution water inlet 42 and connected to an expansion cyclone 44 which provides a glue or paste ready for use.

In this variant of the process, the reagent and catalyst are added to the starch before gelatinisation. Gelatinisation is effected at elevated temperature and pressure, and the resulting paste is subjected, whilst still hot and under pressure, with the UHF radiation treatment. In this variant, therefore, step (d) is performed after step (c).

Referring now to Figure 2, the thermal cooker 24 has been omitted, and the UHF radiation treatment 32 serves not only to modify the starch but also to gelatinize it. The process is operated at atmospheric or elevated pressure, depending on the viscosity it is desired to obtain. This variant of the process is generally not preferred, on the ground that it is generally cheaper to heat the starch slurry to gelatinising temperature by means of steam than by UHF radiation. In this variant of the process, therefore, step (d) is performed during step (c).

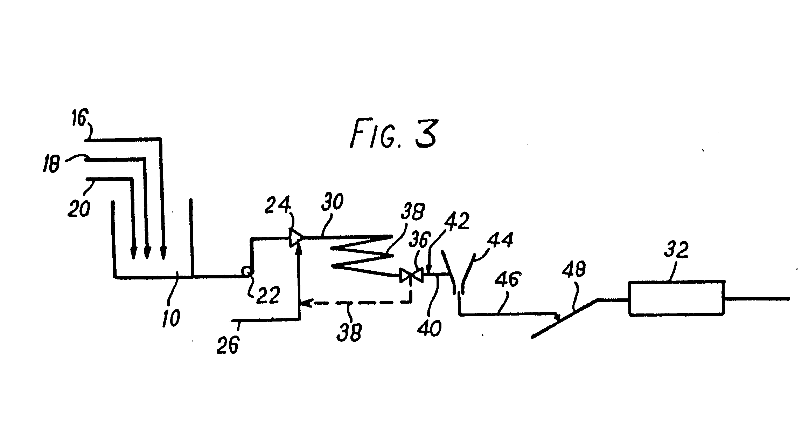

In the variant shown in Figure 3, the starting starch, the reagent and catalyst are added to the tank 10, cooked in the cooker 24, and the resulting paste is diluted via water inlet 42 and passed to the expansion cyclone 44. The resulting mixture is applied to paper or cardboard sheet 48 and the treated sheet is subjected to UHF radiation in the tunnel 32. In this variant of the process, step (d) performed after step (c).

The nature of the starch used is not critical. Suitable starches include corn starch, potato starch, wheat starch, tapioca starch, rice starch, sorghum starch, waxy corn starch and waxy sorghum starch. The starch may be in admixture with other materials, for example in the form of flour. The starting starch may optionally have been already chemically or physically modified or degraded. For example, it may be convenient in some cases to use acid thinned starch as the starting material.

Suitable reagents for chemically modifying starch according to the invention are well known. Examples are reagents which effect etherification, esterification, hydrolysis, cross-linking, oxidation or dextrinisation, as described in Radley "Starch and its Derivatives," 1968 Chapman and Hall Ltd., Chapters 11 and 12; and Whistler/Pascall "Starch: Chemistry and technology" Academic Press, Volume 1 (1965) Chapters 18 and 19, and Volume II (1967) Chapters 9, 10, 11, 13, 14, 15, 16, 17 and 19. It is also possible to prepare starch copolymers and starch graft copolymers, for example with products from the classes polyvinyl alcohols, acrylamides and monomers and polymers derived from petroleum.

The amount of the reagent used depends on the degree of substitution required, and on the reaction efficiency.

UHF radiation has a frequency in the range 300 MHz to 300,000 MHz. Within this range, only certain specific bands are permitted for industrial use in many countries, and these include 915,2450,5800 and 22155 MHz.

It is preferred to use UHF radiation of a frequency which activates the H—OH dipoles of the starch. The frequency of industrial UHF apparatus built today corresponding best to the dielectric constant of the H—OH dipoles of starch is 2450 MHz. In this alternating electromagnetic field, the H—OH dipoles orient themselves and are thereby subjected to a permanent oscillation which activates them. In this way the chemical reactions can be induced immediately.

The time for which it is necessary to subject the mixture to UHF radiation in order to achieve the desired degree of chemical modification depends on the power available and the flow rate of the starch slurry or paper or cardboard sheet carrying the starch glue.

Generally speaking, to induce a chemical reaction the processing time under the UHF radiation is not more than five minutes, and is quite often less than one minute. The temperature increase caused by UHF radiation is often less than 50°C, and is in any event less than 100°C.

The nature of the equipment used to effect the radiation treatment is not critical. Conveniently, this equipment includes a transmitter, a tunnel constituting a wave guide and means for conveying the starch/reagent mixture to be treated through the tunnel, the form and size of the wave guide being calculated in relation to the product to be processed and the frequency of the radiation used. (Such equipment is offered by Industrie Microondes Internationale under the trade Mark Gigatron.) When the mixture is in slurry form, the conveying means may comprise a pipe or trough of a material transparent to the UHF radiation, for example glass.

Example 1

The following example of a method according to the invention was performed in equipment as shown in Figure 1.

There was continuously prepared an aqueous slurry of native corn starch at a dry solid content of 25% by weight, which contained in addition a cationic reagent (epoxypropyltrimethylammonium chloride) in an amount of 53 kg of active material per ton of dry starch, and a catalyst (8% aqueous solution of sodium hydroxide) in an amount of 18 kg of sodium hydroxide per ton of dry starch.

The mixture thus prepared was passed to a cooker where the starch was gelatinised by the injection of steam at 700 kPa and the temperature raised to 130°C. The resulting paste was passed at 360 litres per hour through a tube where it was subjected to UHF radiation (2450 MH$_z$ 3000 W) for twenty seconds.

The degree of substitution evaluated on the basis of a glue sample previously neutralised and dialysed in order to eliminate all constraining solubles (reagents which did not react) was 0.054.

Example 2

This was performed in equipment shown in Figure No. 2. In this case UHF radiation serves not only to modify the starch but also to gelatinise it.

To show the flexibility of the process an acid thinned corn starch was used for this example. That means a low viscosity of the paste, and a temperature of cooking of about 100°C without any pressure.

As for Example No. 1 an aqueous slurry of starch at a dry solids content of 25% by weight was continuously prepared.

To this acid thinned corn starch slurry were added a cationic reagent (epoxypropyltrimethylammonium chloride) in an amount of 53 kg of active material per ton of dry starch, and a catalyst (8% aqueous solution of sodium hydroxide) in an amount of 18 kg of sodium hydroxide per ton of dry starch.

This mixture was passed at 300 litres per hour through a tube where it was subjected to UHF radiation (2450 MH$_z$ 30 kW) for one minute.

The degree of substitution evaluated on the basis of the glue sample previously neutralised and dialysed in order to eliminate all constraining solubles (reagents which did not react) was 0.035.

It was assumed that there took place, at the same time, the heating of the starch slurry and the chemical reaction (the temperature was below 80°C), and that the gelatinisation of the starch only took place subsequently.

It was also assumed that the reason why a lower degree of substitution was obtained then in Example 1 was that the starch granules were not totally destroyed when the chemical reaction took place.

Example 3

According to Figure 3 modification of starch could be realised directly during the paper sizing using UHF radiation.

The starch paste was prepared as described in example 1.

According to Figure 3 native corn starch or acid thinned corn starch slurry prepared continuously was mixed with chemicals; cationic reagent (epoxypropyltrimethylammonium chloride) in an amount of 15 kg of active material per ton of dry starch, and a catalyst (8% aqueous solution of sodium hydroxide) in an amount of 16 kg of sodium hydroxide per ton dry starch. This mixture was then passed through a cooker where the starch was gelatinised by the injection of steam at 700 kPa and the temperature raised to 130°C.

At this point and in both cases a mixture of starch paste, chemicals, reagent, catalyst was obtained.

This mixture was used to size paper sheets using a coating rod technique which is well known and is not critical. The wet sized paper sheets were then subjected to UHF radiation. In this case the UHF radiation performs the double function of drying the paper and inducing chemical reaction between the starch and reagents.

Three sheets each measuring 20 cm × 30 cm and having about 5 gm/m² of dry substance coating were subjected to UHF radiation (2450 MHz, 300 W) for one minute. The degree of substitution was evaluated after repulping sized paper sheet, and filtration, neutralisation and dialysis of the obtained solution in order to eliminate all constraining solubles (reagents which did not react). The degree of substitution obtained was 0.015.

## Claims

1. A process for chemically modifying starch, characterized by the steps of:—
   (a) providing an aqueous slurry of the starch;
   (b) forming a mixture of the said starch with at least one reagent which reacts chemically with the starch;
   (c) gelatinizing the starch; and
   (d) subjecting the starch/reagent mixture to UHF radiation so as to effect chemical modification of the starch,
   wherein steps (c) and (d) are carried out at the same time or step (c) is carried out before step (d).

2. A process as claimed in claim 1, which process is operated continuously.

3. A process as claimed in claim 2, which process comprises providing an aqueous slurry of starch in admixture with at least one reagent which reacts chemically with the starch, effecting gelatinisation of the starch at elevated temperature and pressure, and subjecting the resulting paste, while still hot and under pressure, to UHF radiation so as to effect chemical modification of the starch.

4. A process as claimed in claim 2, which process comprises providing an aqueous slurry of starch in admixture with at least one reagent which reacts chemically with the starch, and subjecting the resulting starch/reagent mixture to UHF radiation so as to effect gelatinisation of the starch and chemical modification of the starch.

5. A process as claimed in claim 2, which process comprises providing an aqueous slurry of starch in admixture with at least one reagent which reacts chemically with the starch, gelatinising the starch in said slurry, applying the resulting paste to a sheet, and subjecting the treated sheet to UHF radiation so as to effect chemical modification of the starch.

6. A process as claimed in any one of claims 1 to 5, wherein the starch used is corn starch.

7. A process as claimed in any one of claims 1 to 6, wherein the reagent which reacts chemically with the starch is an etherification, esterification hydrolysis, cross-linking, oxidation or dextrinisation reagent.

8. A process as claimed in any one of claims 1 to 7, wherein the UHF radiation has a frequency of about 2450 MHz.

**Revendications**

1. prodédé pour modifier chimiquement l'amidon, caractérisé par les étapes qui consistent:
   (a) à utiliser une suspension aqueuse de l'amidon;
   (b) à former un mélange dudit amidon avec au moins un réactif qui réagit chimiquement avec l'amidon;
   (c) à gélatiniser l'amidon;
   (d) à soumettre le mélange amidon/réactif à un rayonnement UHF afin d'effectuer une modification chimique de l'amidon,
   dans lequel les étapes (c) et (d) sont effectuées au même moment, ou l'étape (c) est effectuée avant l'étape (d).

2. Procédé selon la revendication 1, lequel procédé est mis en oeuvre en continu.

3. Procédé selon la revendication 2, lequel procédé consiste à utiliser une suspension aqueuse de l'amidon en mélange avec au moins un réactif qui réagit chimiquement avec l'amidon, à effectuer une gélatinisation de l'amidon à température et pression élevées, et à soumettre la pâte résultante, tandis qu'elle est encore chaude et sous pression, à un rayonnement UHF afin d'effectuer une modification chimique de l'amidon.

4. Procédé selon la revendication 2, lequel procédé consiste à utiliser une suspension aqueuse d'amidon en mélange avec au moins un réactif qui réagit chimiquement avec l'amidon, et à soumettre le mélange résultant amidon/réactif à un rayonnement UHF afin d'effectuer une gélatinisation de l'amidon et une modification chimique de l'amidon.

5. Procédé selon la revendication 2, lequel procédé consiste à utiliser une suspension aqueuse d'amidon en mélange avec au moins un réactif qui réagit chimiquement avec l'amideon, à gélatiniser l'amidon dans ladite suspension, à appliquer la pâte résultante sur une feuille, et à soumettre la feuille traitée à un rayonnement UHF afin d'effectuer une modification chimique de l'amidon.

6. procédé selon l'une quelconque des revendications 1 à 5, dans lequel l'amidon utilisé est de l'amidon de maïs.

7. Procédé selon l'une quelconque des revendications 1 à 6, dans lequel le réactif qui réagit chimiquement avec l'amidon est un réactif d'ethérification, d'estérification, d'hydrolyse, de réticulation, d'oxydation ou de dextrinisation.

8. Procédé selon l'une quelconque des revendications 1 à 7, dans lequel le rayonnement UHF a une fréquence d'environ 2450 MHz.

**Patentansprüche**

1. Verfahren zum Modifizieren von Stärke auf chemischem Wege, dadurch gekennzeichnet, daß

a) eine wässrige Aufschlämmung der Stärke bereitet wird;

b) ein Gemisch der Stärke mit zumindest einem Reaktionsmittel, das mit der Stärke chemisch reagiert, gebildet wird;

c) die Stärke gelatiniert wird; und

d) das Stärke/Reaktionsmittel-Gemisch einer UHF-Bestrahlung unterworfen wird, um die chemische Modifikation der Stärke herbeizuführen,

wobei die Schritte c) und d) gleichzeitig oder Schritt c) vor Schritt d) durchgeführt werden.

2. Verfahren nach Anspruch 1, dadurch gekennzeichnet, daß das Verfahren kontinuierlich betrieben wird.

3. Verfahren nach Anspruch 1, dadurch gekennzeichnet, daß eine wässrige Aufschlämmung von Stärke unter Beimischung mindestens eines mit der Stärke chemisch reagierenden Reaktionsmittels bereitet wird, daß das Gelatinieren der Stärke bei erhöhter Temperatur und Druck erfolgt und der entstandene Brei, solange er noch heiß und unter Druck ist, einer UHF-Bestrahlung unterworfen wird, um eine chemische Modifikation der Stärke herbeizuführen.

4. Verfahren nach Anspruch 2, dadurch gekennzeichnet, daß eine wässrige Aufschlämmung von Stärke unter Beimischung von zumindest einem Reaktionsmittel, das mit der Stärke chemisch reagiert, bereitet wird und das entstandene Stärke/Reaktionsmittel-Gemisch einer UHF-Bestrahlung unterworfen iwrd, um Gelatinierung und chemische Modifikation der Stärke herbeizuführen.

5. Verfahren nach Anspruch 2, dadurch gekennzeichnet, daß eine wässrige Aufschlämmung von Stärke unter Beimischung zumindest eines Reaktionsmittels, das mit der Stärke chemisch reagiert, bereitet wird, die Stärke in der Aufschlämmung gelatiniert wird, der entstandene Brei auf eine Lage aufgebracht wird und die behandelte Lage einer UHF-Bestrahlung unterworfen wird, um die Modifikation der Stärke herbeizuführen.

6. Verfahren nach irgendeinem der vorhergehenden Ansprüche 1—5, dadurch gekennzeichnet, daß die verwendete Stärke Mais ist.

7. Verfahren nach irgendeinem der vorhergehenden Ansprüche 1—6, dadurch gekennzeichnet, daß das Reaktionsmittel, das mit der Stärke chemisch reagiert, ein ätherbildendes, esterbildendes, hydrolisierendes, vernetzendes, oxydierendes oder dextrinierendes Reaktionsmittel ist.

8. Verfahren nach irgendeinem der vorhergehenden Ansprüche 1—7, dadurch gekennzeichnet, daß die UHF-Strahlung eine Frequenz von 2450 MHz hat.

0 046 347

# FIG.1

# FIG.2

1

FIG. 3